# EUROPEAN PATENT APPLICATION

(11) **EP 3 579 591 A1**
(43) Date of publication of application: **11.12.2019**
(21) Application number: 19183583.4
(22) Date of filing: 06.01.2011
(51) Int. Cl.: H04W 8/22, H04W 48/02

(54) **MACHINE TYPE COMMUNICATION SYSTEM**

(30) Priority: 06.01.2010 KR 20100000846; 30.03.2010 KR 20100028385; 30.04.2010 KR 20100040482; 05.08.2010 KR 20100075487; 14.09.2010 KR 20100089939
(62) Divisional of application: 11731935.0
(71) Applicant: Electronics and Telecommunications Research Institute, Daejeon 305-700 (KR)
(72) Inventor: LEE, Kook Jin, 137-073 Seoul (KR); KIM, Jae Heung, 305-728 Daejeon (KR); AHN, Jae-Young, 305-761 Daejeon (KR)
(74) Representative: Betten & Resch

(57) **Abstract**

Provided is a machine type communication system. The machine type communication system may include a machine type communication terminal and a machine type communication server. The machine type communication terminal may be applied to a navigation of a vehicle, a sensor network of a bridge, and the like, to transmit data to the machine type communication server using a wireless network.

## Description

### Technical Field

Embodiments of the present invention relate to a machine type communication system, and more particularly, to a method and a procedure of transmitting and receiving a packet in a wireless network for machine type communication.

### Background Art

A machine type communication service denotes a service for exchanging information between machine devices or between a machine device and a user. Machine type communication may be employed for a navigation of a vehicle, a sensor network, and the like, using a specifically designed terminal and a server, for example, a communication terminal with a relatively low data rate.

In general, information exchange between a machine type communication terminal and a machine type communication server has been performed via a wired network. Accordingly, there is a desire for a method and a procedure for establishing an environment, transferring and controlling information with respect to information exchange between the machine type communication terminal and the machine type communication server using a wireless network, and for a management method and a procedure that may maintain a machine type communication service.

### Disclosure of Invention

### Technical Goals

An aspect of the present invention provides a method that may transmit data for a machine type communication service.

Another aspect of the present invention also provides a method that may manage a wireless network for providing a machine type communication service.

### Technical solutions

According to an aspect of the present invention, there is provided a machine type communication terminal, including: a transmitter to transmit feature information associated with the machine type communication terminal to a machine type communication server; and a receiver to receive, from the machine type communication server in response to the feature information, control information that is based on a feature of the machine type communication terminal.

According to another aspect of the present invention, there is provided a machine type communication terminal, including: a network address storage unit to store the same network address of the machine type communication terminal as a network address of a second machine type communication terminal.

According to still another aspect of the present invention, there is provided a machine type communication server, including: a transmitter to transmit a communication request to a plurality of machine type communication terminals having the same network address; and a receiver to receive data from at least one communication terminal among the plurality of machine type communication terminals in response to the communication request, and to terminate a communication procedure according to reception of the data.

### Effect of the Invention

According to embodiments of the present invention, it is possible to transmit data for a machine type communication service.

Also, according to embodiments of the present invention, it is possible to manage a wireless network for providing a machine type communication service.

### Brief Description of Drawings

FIG 1 is a diagram illustrating an example of a machine type communication system using a wireless network or a wired network;
FIG. 2 is a diagram illustrating an operation scenario for a navigation and a control of a vehicle using a machine type communication service;
FIG 3 is a diagram illustrating an operation scenario of a machine type communication service within a home;
FIG. 4 is a diagram illustrating an example of an automated machine type communication service available at home;
FIG. 5 is a block diagram illustrating a configuration of a machine type communication terminal according to an embodiment of the present invention;
FIG 6 is a block diagram illustrating a configuration of a machine type communication terminal according to another embodiment of the present invention;
FIG 7 is a block diagram illustrating a configuration of a machine type communication server according to an embodiment of the present invention;
FIG. 8 is a diagram illustrating a procedure for exchanging control information for a wireless network access of a machine type communication terminal according to an embodiment of the present invention; and
FIG. 9 is a diagram illustrating a communication scheme enabling each of a plurality of machine type communication terminals within the same group to include a radio bearer in a radio access interval and enabling the plurality of machine type communication terminals to share a single radio bearer after a base station according to an embodiment of the present invention.

### Best Mode for Carrying Out the Invention

Reference will now be made in detail to embodiments of the present invention, examples of which are illustrated in the accompanying drawings, wherein like reference numerals refer to the like elements throughout. The embodiments are described below in order to explain the present invention by referring to the figures.

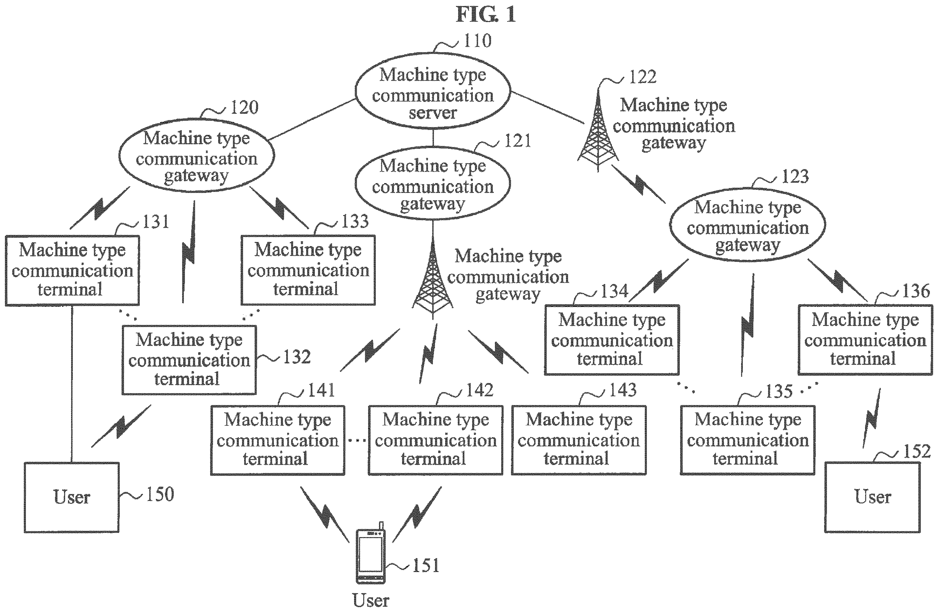

FIG 1 is a diagram illustrating an example of a machine type communication system using a wireless network or a wired network.

Referring to FIG. 1, the machine type communication system may include a machine type communication server 110, machine type communication gateways 120, 121, 122, and 123, and machine type communication terminals 131, 132, 133, 134, 135, 136, 141, 142, and 143.

A wireless network for supporting a machine type communication service may include, for example, a wireless local area network (LAN), a cellular mobile communication network, or a wireless network separately configured for the machine type communication service.

Here, a machine type communication server denotes an entity having an interface with a network or a cellular network that provides the machine type communication service.

A machine type communication gateway functions to manage a control plane with a machine type communication server and machine type communication terminals, or functions to relay communications between the machine type communication server and the machine type communication terminals. Also, the machine type communication gateway may receive data from a plurality of machine type communication terminals and transmit the data to the wireless network.

A machine type communication terminal denotes a terminal that may access a machine type communication server using a communication network and the like, and may provide a variety of services to users.

According to an aspect, a machine type communication terminal may correspond to one type among a variety of types. For example, a first type of the machine type communication terminal may be a terminal that does not have all of functions of the machine type communication terminal like a module form transplanted into a general user terminal in a cellular system. Also, the first type of the machine type communication terminal may be a terminal that does not have a function of an existing terminal, that is, may be classified as a simplified machine type communication terminal. For example, the first type of the machine type communication terminal may be transplanted into a navigation of a vehicle or a cellular phone and thereby be used to control the navigation or the vehicle.

A second type of the machine type communication terminal may be a machine type communication terminal transplanted into separate apparatuses for providing the machine type communication service, for example, an electronic device, an information technology (IT) device, a vehicle, an industrial facility device, a basic industry facility device, a social security facility device, and an environmental facility device. This type of terminal may include all the functions of the machine type communication terminal and may be classified as a complex machine type communication terminal. For example, the second type of the machine type communication terminal may be transplanted into a measuring instrument for water supply, electricity supply, gas supply, and the like, an elevator, an automatic vending machine, and the like, and may transmit and receive control information and data to and from the wireless network.

A third type of the machine type communication terminal may be a terminal that is not connected with another wired/wireless network and has only an interface with a single communication network, for example, a 3^{rd} Generation Partnership Project (3GPP) communication network. For example, a machine type communication terminal used for sensing a temperature, a disaster, and the like, may collect relevant information and report to the machine type communication server and the like about the collected information using a designated communication network.

A fourth type of the machine type communication terminal may be a communication apparatus that has an interface with at least two wireless networks. For example, the fourth type of the machine type communication terminal may be an apparatus that may connect different wireless networks such as a sensor network, a mesh network, an ad hoc network a cellular network, and the like, and may transfer collected data or control information to wireless networks and receive the data or the control information from the wireless networks. An example of the machine type communication terminal belonging to the fourth type may include a communication apparatus to report to the machine type communication server about information collected from a sensor network of a bridge via a cellular network.

Referring to FIG. 1, users 151, 152, and 153 may use services provided from the machine type communication server 110 or the machine type communication terminals 131, 132, 133, 134, 135, 136, 141, 142, and 143. Accordingly, the users 151, 152, and 153 may receive data of the machine type communication server 110 or the machine type communication terminals 131, 132, 133, 134, 135, 136, 141, 142, and 143, or may change setting of the machine type communication server 110 or the machine type communication terminals 131, 132, 133, 134, 135, 136, 141, 142, and 143, periodically or according to a request.

In general, machine type communication terminals may need to be uniquely classified in a network. In particular, the machine type communication terminals may need to be classifiable within a wireless network based on an apparatus type. A function, a feature, and the like, that may be provided from each machine type communication terminal may need to be classifiable and identifiable within the wireless network whereby each machine type communication terminal may need to be classifiable based on a group unit.

For this, in a wireless LAN or a cellular mobile communication network, a separate identifier (ID) may be introduced to share an ID of a machine type communication terminal being operated in a corresponding wireless network, or to support a service using the machine type communication terminal.

Using the ID of the machine type communication terminal, the wireless network, for example, the wireless network LAN and the cellular mobile communication network, for providing a service with respect to a machine type communication terminal may identify 1) a predetermined machine type communication terminal or a type of the predetermined machine type communication terminal, 2) a service or a function that may be provided from the machine type communication terminal, and 3) a service group including machine type communication terminals that may provide a predetermined service.

According to an aspect, a plurality of machine type communication terminals may be identifiable as a group from a wireless network.

In the case of paging, paging may be performed with respect to a group including machine type communication terminals. For example, a group ID may be assigned to the group including the machine type communication terminals. When using a paging message, it is possible to use an ID indicating a paging group, or to assign a predetermined value to an International Mobile Subscriber Identity (IMSI) and an S-Temporary Mobile Subscriber Identity (TMSI). For example, when the IMSI is '0', an existing terminal may disregard corresponding paging and only machine type communication terminals may receive paging.

According to another aspect, a new ID, for example, MTC-RNTI that may be recognizable by machine type communication terminals may be defined, and the machine type communication terminals may receive a paging message using the defined new ID.

Discontinuous reception (DRX) or paging with respect to a machine type communication terminal may be set at relatively great intervals compared to existing terminals. The machine type communication terminal may receive a paging interval that is set to be the same as the existing terminals, and may set a predetermined paging interval to be applied to the machine type communication terminal by combining the received paging interval and predetermined control information.

The machine type communication terminal may receive system information or control information modified for a predetermined paging interval, and may react based on the modified system information. For example, the wireless network may extend a system frame number and may transmit the extended system frame number to the machine type communication terminal using system information. In this case, additional control information may be transferred to the system information, or control information may be transmitted by newly defining a System Information Block(SIB) for the machine type communication terminal.

For example, MTC SIB, SIB 14, SIB 15, or following SIB may be defined for the machine type communication terminal. A corresponding SIB may be scheduled using SIB1 with existing SIBs. RNTI may be newly defined in order to receive system information of the machine type communication terminal.

When the machine type communication terminal does not react for the predetermined paging interval, the wireless network may determine that connection between the wireless network and the machine type communication terminal is disconnected.

Machine type communication terminals may need to operate with a significantly small amount of power consumption. Consequently, a low power consuming operation may need to be achieved by controlling power on/off. A predetermined machine type communication terminal or a predetermined machine type communication service may need to set machine type communication information and control information to be transmitted and received at a predetermined time. A related function and interface may need to be provided so that a machine type communication control block, a user terminal within the wireless network, a machine type communication server, a machine type communication subscriber, a machine type communication service provider, and the like within a wireless network supporting a machine type communication service may set a time for the above predetermined operation and management. Machine type communication terminals may consider an operation at a dedicated frequency for machine type communication to be operable with a significantly small amount of power consumption, thereby achieving an operation of the wireless network.

According to an aspect, machine type communication terminals may perform different operations based on a remaining amount of power. For example, machine type communication terminals with insufficient power may increase a measurement interval and a reporting interval.

Dynamic Voltage Scaling (DVS) may be introduced to enable a machine type communication terminal to be operated in a significantly low power consumption state. When data to be transmitted is absent in a connection release state, a cellular RRC IDLE state or connection state, or a cellular RRC_CONNECTED state, the machine type communication terminal may operate at a significantly low voltage or low clock. Accordingly, it is possible to change an operation scheme of a machine type communication terminal in a wireless network or setting of a wireless link.

Also, a predetermined machine type communication service may supply power to a machine type communication terminal, for example, power on the machine type communication terminal, and at the same time, enables an operation such as initialization of the machine type communication terminal, an access to a wireless network, and the like, without a separate setting and control process or procedure.

As an application of the aforementioned entities or nodes and a communication procedure and scheme between the entities or the nodes, a variety of services, for example, a navigation of a vehicle, a traffic signal control, a social security facility equipment such as a closed circuit, a vehicle control, a disaster monitor, a home facility, and the like may be provided. More specifically, in the case of the navigation of the vehicle, services, for example, a travel speed report, a service fee payment, a software download, and the like, may be provided through setting of a threshold. In the case of the vehicle control, detection and report of a vehicle theft, a door lock function, that is, a user terminal recognition function, a vehicle start and control function, and a vehicle consumable supply measuring and inspecting function may be provided. In the case of the disaster monitor, services, for example, an earthquake detection by setting a vibration threshold, a forest fire/fire detection by setting a temperature threshold or detecting smokes, a management by monitoring flooding or an amount of precipitation, and the like may be provided. As a home machine type communication service, a door open/close, an air conditioning and heating device control, an electronic device control, measuring of water supply, electricity, and the like at home, an intrusion alert, and the like may be provided.

A machine type communication terminal may need to be remote controllable by way of a machine type communication server or a wireless network. Also, the machine type communication terminal may need to be remote controllable with respect to activation or deactivation setting for each function and for each feature. When an operator of the wireless network also performs a role as a service provider, the wireless network may detect an operation feature of a machine type communication terminal and activate or deactivate a predetermined function of the machine type communication terminal.

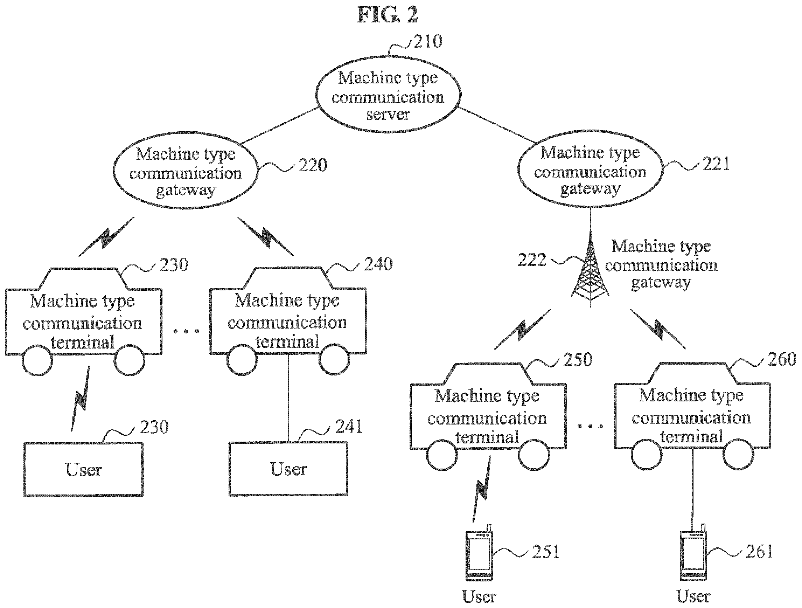

FIG 2 is a diagram illustrating an operation scenario for a navigation and a control of a vehicle using a machine type communication service.

Referring to FIG. 2, a machine type communication server 210 may be connected to at least one machine type communication gateway, for example, machine type communication gateways 220 and 221 via a wired network or a wireless network. The machine type communication gateway 220 may be connected to a machine type communication terminal 230 installed in a vehicle or a machine type communication terminal 241 of a user via an interface 240 installed in a vehicle. A base station 222 constituting the wireless network may operate as a machine type communication gateway. The machine type communication server 210 may be connected to machine type communication terminals 250 and 260 via a plurality of machine type communication gateways 221 and 222.

In FIG 2, the machine type communication terminal 230 may indicate a machine type communication terminal that is transplanted into and thereby is installed in the vehicle. In this case, a user may control a machine type communication function using a machine type communication terminal 241, or may control and set a machine type communication function via a spate user interface provided from the machine type communication terminal 240.

The machine type communication function for navigation and vehicle control may be applied to the machine type communication terminal 250. A method of providing a machine type communication service by setting, in the vehicle, an interface for the machine type communication terminal 250 may be employed.

Similarly, the vehicle may provide an interface for the machine type communication terminal 260. A user node 261 may control the machine type communication terminal 260 via a wireless LAN or a cellular mobile communication network.

According to an aspect, a machine type communication terminal in a vehicle may report to a machine type communication server about information associated with a travel speed of the vehicle, a position of the vehicle, and the like, according to setting and controlling of the machine type communication server and a user via a machine type communication gateway. The machine type communication server and the user may set a threshold with respect to the travel speed of the vehicle. When the travel speed becomes slower or faster than the set threshold, the machine type communication server and the user may control the machine type communication terminal to make a report. The threshold may be set to have at least one value.

The machine type communication server and the user may control the vehicle to make a report when the vehicle enters a predetermined region, a road, and the like. By collecting and analyzing reports, the machine type communication server may provide safe and convenient traffic information, for example, road traffic information such as a traffic jam, paid or free road guide information, road construction information, frozen and flooded road information, and the like, or may provide optimal navigation information to a destination, real-time traffic information, and the like.

In the wireless network for providing the machine type communication service, a connection setting parameter of the wireless network may vary based on an occurrence frequency and an occurrence interval of packet information for the machine type communication service or the machine type communication function, and a required channel level. The connection setting parameter may also vary based on a feature of a different machine type communication service.

For example, the connection setting parameter of the wireless network may vary based on mobility information of the machine type communication terminal, a transmission rate, the imminence of data transmission, a communication interval, a priority of data transmission, security requirement information, whether grouping is applied, and the like.

For example, a feature indicating a mobility of the machine type communication terminal may be classified as 'fixed', 'semi fixed', 'low speed travel', 'high speed travel', and the like.

As another example for the feature indicating the mobility of the machine type communication terminal, a machine type communication terminal moving in a predetermined region may be classified as a loitering machine type communication terminal.

In general, the machine type communication terminal may have a feature of 'fixed', 'semi fixed', and 'low speed travel', or may have a feature of moving within a constrained region. This may be referred to as a 'low mobility'. Using the low mobility, it is possible to conveniently manage the mobility of the machine type communication terminal.

For example, when the low mobility is activated, the mobility of the machine type communication terminal may not be managed or may be relatively less managed compared to other terminals.

According to an aspect, a machine type communication terminal in a connection state, for example, a machine type communication terminal in an RRC_Connected state in a 3GPP network may set s-Measure of MeasConfig of an RRC message to a value greater than an actual value. According to another aspect, a wireless network may set a new threshold for a machine type communication terminal. That is, the wireless network may newly establish a criterion for performing measurement. According to still another aspect, similar to a machine type communication terminal in an RRC_IDLE state, it is possible to increase a measurement interval by defining low mobility that is a new speed state, and a scaling factor according to the low mobility.

A machine type communication terminal in a connection release state, for example, a machine type communication terminal in an RRC_IDLE state in a 3GPP network may decrease a number of measurement procedures for cell-reselection. For this, the machine type communication terminal may set a value of parameter S_{ServingCell} obtained from system information to a value greater than an obtained value.

Also, the wireless network may decrease a number of measurements of the machine type communication terminal by setting parameter S_{intrasearch} or S_{nonintrasearch} included in system information to a relatively low value.

In this case, system information may be unique information for each cell and thus, may have a meaning only within a cell including a corresponding machine type communication terminal. Accordingly, a different measurement value from another terminal may be set by defining separate system information, for example, MTC SIB or SIB14 for the machine type communication terminal.

According to another aspect, the wireless network may decrease the number of measurements of the machine type communication terminal by extending a measurement interval or a reporting interval with respect to a serving cell. According to still another aspect, the wireless network may set the measurement interval of the machine type communication terminal to be the same as another terminal, and may decrease a number of reportings by enabling the corresponding machine type communication terminal to report a value induced from a plurality of measurements.

For example, the machine type communication terminal may perform measurement and reporting at intervals corresponding to a fold of a DRX interval or a paging interval, or at a time excluding the above interval. That is, the machine type communication terminal may perform measurement and reporting at intervals corresponding to two folds of the DRX interval or the paging interval, or may perform measurement and reporting regardless of the DRX interval or the paging interval. According to an aspect, the machine type communication terminal may perform measurement and reporting at least one time based on an interval shorter than the DRX interval or the paging interval, or may perform measurement and reporting based on an interval longer than the DRX interval or the paging interval and then, may enter into DRX.

According to an aspect, by defining a new mobility state that is a low mobility, it is possible to decrease a number of cell-reselections of the machine type communication terminal. For this, new values for T_{CRmax}, N_{CR_H}, N_{CR_M}, and T_{CRmaxHyst} of MobilityStateParameters and a new parameter N_{CR_L} may be defined. Accordingly, new *sf-Low* may be defined. A corresponding parameter value, for example, {1.5, 2.0, 3.0, 5.0, 10.0...} may be defined. Accordingly, by defining *sf-Low* value of SpeedStateScaleFactor, it is possible to further extend a value of T_Reselection, and to decrease the number of cell-reselections.

According to another aspect, when a measurement result of a service sell becomes to be less than or equal to a predetermined threshold due to a poor state of the service cell, a machine type communication terminal may not perform procedures for mobility support such as a measurement or cell-reselection procedure with respect to a neighboring cell.

According to an aspect, a machine type communication terminal may manage its mobility state, and may report to a wireless network about the mobility state. The mobility state managed and reported by the machine type communication terminal may include position information of the machine type communication terminal, cell related information, cell-selection related information, cell-reselection related information, handover information, serving cell and target cell related information, and the like. When the machine type communication terminal performs a mobility related procedure, the machine type communication terminal may transfer the mobility state to the wireless network, or may report to the wireless network about the mobility state periodically or in various cases, for example, a case where a parameter exceeds a threshold, and the like.

According to an aspect, a machine type communication terminal may request a connection establishment and exchange information by accessing a wireless network, instead of maintaining a control plane connection with a target base station via a serving base station such as an existing cellular system. When the machine type communication terminal uses a service with a relatively short interval while traveling at a high speed, or when the machine type communication terminal uses a service with a time constraint on a transmission, a handover procedure of the existing cellular system may be followed.

To support a mobility, the machine type communication terminal may transmit position information of the machine type communication terminal to another machine type communication terminal. Here, the position information may include information associated with an ID of a cell received from the wireless network, or an ID for identifying an installation region of the machine type communication terminal, a global positioning system (GPS), and the like.

The machine type communication terminal may periodically or aperiodically transmit its position information. Even though a position is changed, the machine type communication terminal may not necessarily perform a mobility management procedure. The machine type communication terminal may update its position at predetermined time.

The machine type communication terminal may move to a constrained region. In this case, the wireless network may control an operation of the machine type communication terminal entering the constraint region. The wireless network may determine whether the machine type communication terminal is accessible to the wireless network in the constrained region using an ID of the machine type communication terminal and the like. If inaccessible, the wireless network may reject the access request of the machine type communication terminal. For example, a HSS may transfer, to MME, a list of base stations accessible by the machine type communication terminal having the low mobility, a list of cells, a list of tracking regions, a list of registration regions, an MME list, and the like. Based thereon, the MME may identify a base station accessible by the machine type communication terminal and a base station inaccessible by the machine type communication terminal.

When an access of the machine type communication terminal is temporally constrained, the HSS may provide side information to temporally constrain the access of the machine type communication terminal. For example, the side information may include a time zone in which the machine type communication terminal is allowed to access the wireless network, or a list of currently accessible base stations.

The wireless network may reject the access of the machine type communication terminal. In this case, the wireless network may reject the access of the machine type communication terminal while the machine type communication is in a random access, or may bar the access of the machine type communication terminal. Also, when the machine type communication terminal is in an abnormal state, the wireless network may transmit control information of an operation suspension using a paging message, system information, an RRC message, and the like. For example, control information for constraining the access may be transmitted to a terminal attempting random access using the RRC message, or a parameter for constraining the access attempt of the machine type communication terminal to the wireless network, and the like.

The machine type communication terminal may inspect its state and may report the state. For example, when the machine type communication terminal performs an operation excluding predetermined behaviors, and when an artificial manipulation occurs, the machine type communication terminal may determine a corresponding state as an abnormal state, and may transmit the determined state to the machine type communication server.

The machine type communication server may determine whether the machine type communication terminal is in a normal state or in the abnormal state by observing a behavior of the machine type communication terminal. When the machine type communication terminal is determined to be in the abnormal state, the machine type communication server may suspend the operation of the corresponding machine type communication terminal.

For example, the machine type communication terminal may report to the wireless network about the number of cell-selections, the number of cell-reselections, the number of handovers, and the like with respect to the machine type communication terminal. Based thereon, the wireless network may determine whether the machine type communication terminal is in the normal state or in the abnormal state.

When the machine type communication server detects the abnormality of the machine type communication terminal, the wireless network may modify parameter setting and control an operation of the machine type communication terminal.

In a given circumstance, the machine type communication terminal may perform communication using another frequency band. For example, when communication is determined to be impossible in a predetermined frequency band, the machine type communication terminal may transmit data using the other frequency band. When the communication is impossible, the machine type communication terminal may transmit an alert message or a notification message to the wireless network with a priority different from an existing access class. The machine type communication terminal may search all the available frequency bands until the circumstance of the machine type communication terminal is transmitted.

As necessary, the wireless network may transmit the alert message to the machine type communication terminal using a paging message, system information, an RRC message, and the like.

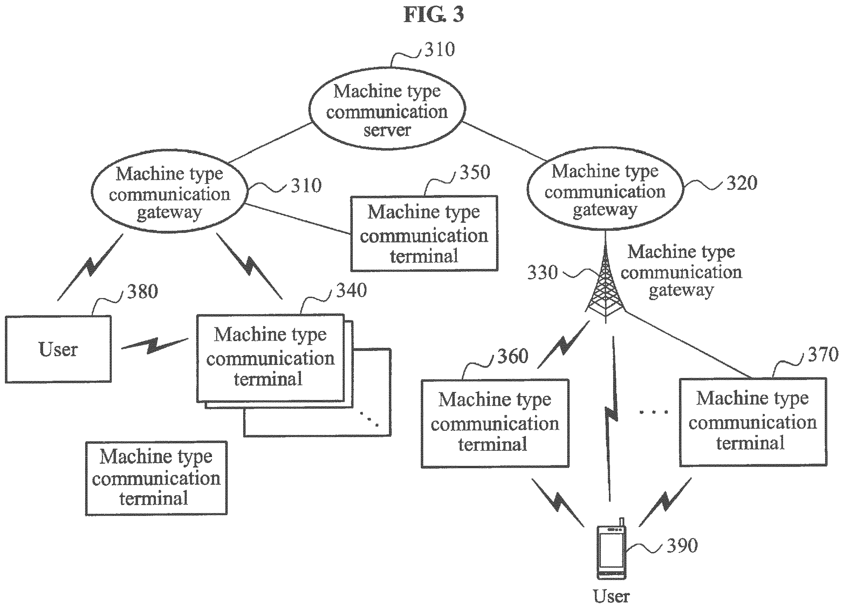

FIG. 3 is a diagram illustrating an operation scenario of a machine type communication service within a home.

A machine type communication server 310 for supporting the machine type communication service at home may be connected to at least one machine type communication gateway using a wired network or a wireless network. Each machine type communication gateway may configure a communication protocol connection for information exchange with machine type communication terminals installed in each home. A small base station or a Home Node B constituting the wireless network may function as the machine type communication gateway. The machine type communication gateway functions to relay data exchange between the machine type communication terminal and the machine type communication server.

Referring to FIG. 3, machine type communication terminals 340, 350, 360, and 370 may be connected to corresponding machine type communication gateways 310, 320, and 330 using the wired network or the wireless network, and may be connected to corresponding user nodes 380 and 390 using the wireless network.

The user node 380 may be applied to a user terminal of a wireless LAN or a cellular mobile communication network. The user node 390 may be separately introduced for a corresponding machine type communication service.

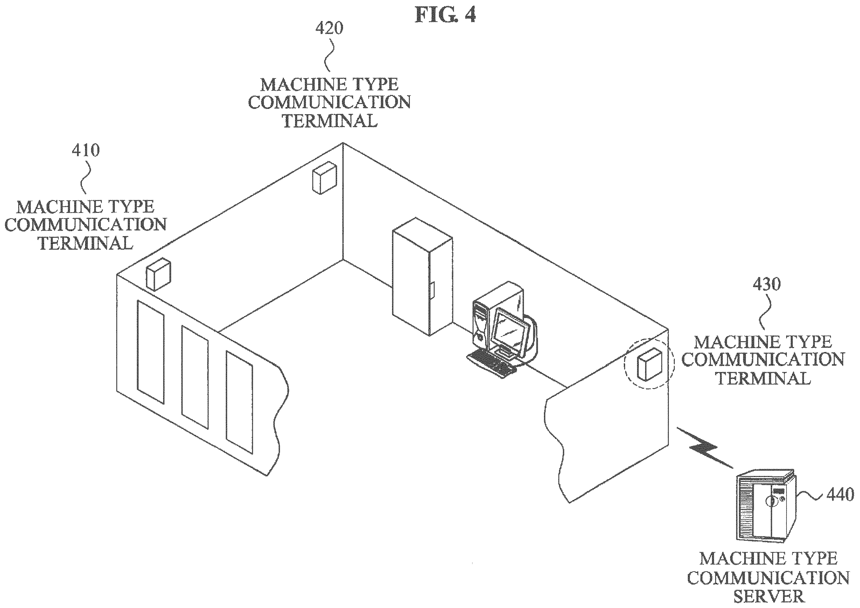

FIG 4 is a diagram illustrating an example of an automated machine type communication service available at home.

FIG 4 shows an automated heating, ventilating, and air conditioning (HVAC) system used at home. The HVAC system may include a plurality of machine type communication terminals 410, 420, and 430 and a machine type communication server 440. The machine type communication terminals 410, 420, and 430 may report to the machine type communication server 440 about a temperature, a humidity, and the like of home. Based on information reported from the machine type communication terminals 410, 420, and 430, the machine type communication server 440 may control the machine type communication terminals 410, 420, and 430. When desiring to measure the temperature at home, the machine type communication server 440 may have no need to collect information from all the machine type communication terminals 410, 420, and 430 installed at home since temperature information measured by the machine type communication terminals 410, 420, and 430 is similar to each other.

In this case, the machine type communication terminals 410, 420, and 430 may have the same network address. The machine type communication server 440 may transmit a data transmission request with respect to the network address assigned to each of the machine type communication terminals 410, 420, and 430. Among the machine type communication terminals 410, 420, and 430 having the same network address, only a single machine type communication terminal may transmit data according to a request of the machine type communication server 440.

According to another aspect, each of the machine type communication terminals 410, 420, and 430 may have a unique network address. In this case, the machine type communication server 440 may broadcast or multicast a data transmission request to the machine type communication terminals 410, 420, and 430, and may receive data from one of the machine type communication terminals 410, 420, and 430.

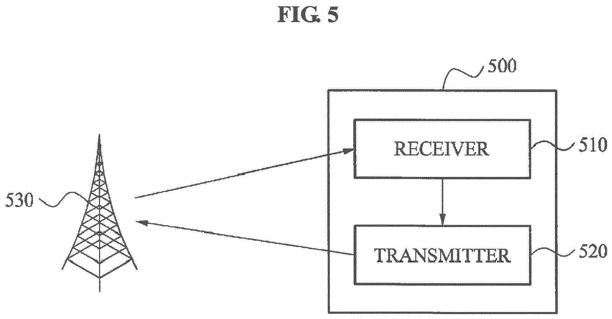

FIG 5 is a block diagram illustrating a configuration of a machine type communication terminal 500 according to an embodiment of the present invention. The machine type communication terminal 500 may include a receiver 510 and a transmitter 520.

According to an aspect, it is possible to control a network access of the machine type communication terminal 500 using an access class used in a 3GPP network. A method of using the access class may include 1) a method of using an access class used in an existing network, 2) a method of introducing a new access class, 3) a method of changing an access scheme, and the like.

As the method of using the access class in the existing network, in the case of a packet transmission associated with the machine type communication terminal 500, it is possible to control a network access of a plurality of machine type communication terminals by changing a network access probability for the packet transmission.

For example, when a packet is to be transmitted, the transmitter 520 may generate a predetermined number between 0 and 1. In this case, the receiver 510 may receive a predetermined threshold from a machine type communication server 530. The transmitter 520 may compare the generated predetermined number with the predetermined threshold. When the generated number is smaller than the threshold, the transmitter 520 may transmit the packet to the machine type communication server 530. By changing the predetermined threshold, the machine type communication server 530 may control a number of machine type communication terminals that access the machine type communication server 530, or transmit packets to the machine type communication server 530.

According to an aspect, the transmitter 520 may exchange control information with the machine type communication server 530 based on connection control information used for at least a third layer of an OSI 7 layer such as an RRC layer and the like. For example, the transmitter 520 may transmit the control information by configuring new connection control information, by adding new setting to existing connection control information, or by adding a new setting value. The control information may include feature information of the machine type communication terminal 500. The feature information may include information indicating that the machine type communication terminal 500 is a machine type communication terminal, a type of the machine type communication terminal 500, and information associated with a function of the machine type communication terminal 500.

The transmitter 520 may transmit feature information by including the feature information in an RRC message. For example, the transmitter 520 may transmit feature information by adding a new RRC information element (IE) or a predetermined field to an RRCConnectionRequest message of a 3GPP wireless network. For example, the transmitter 520 may define MTC_device_IE or a field in an RRC message such as RRCConnectionReconfigurationComplete, RRCConnectionRestablishment, and the like, and may set one value among the aforementioned four types of the machine type communication terminal. Here, MTC_device may be added to the existing RRC message such as RRCConnectionRequest, RRCConnectionReconfigurationComplete, RRCConnectionRestablishment, and the like.

As an example of a method of using an existing defined range value, it is possible to transmit feature information of the machine type communication terminal 500 using EstablishmentCause of RRCConnectionRequest. According to an aspect, it is possible to enable a communication network or the machine type communication server 530 to classify a corresponding terminal as a machine type communication terminal by setting, to MachineTypeCommunication, one of spare1, spare2, and spare3.

Also, it is possible to define, in the existing RRC message, a new IE or a new field such as MTCfeature_activelist, MTCfeature_deactivelist, and the like. A value available for MTCfeature_activelist, MTCfeature_deactivelist, and the like may be LowMobility, ExtraLowPowerConsumption, and the like, that are features of the machine type communication terminal 500. When the new RRC message is defined, it is possible to transmit control information associated with activation/deactivation of a predetermined function of the machine type communication terminal 500 together with the aforementioned RRC IE or field. The RRC message may be used to transmit control information associated with setting of a function to be activated/deactivated, for example, setting of a wireless bearer or a logic channel.

The machine type communication server 530 may determine the machine type communication terminal 500 as a terminal performing a machine type communication function based on feature information of the machine type communication terminal 500. In this case, the feature information may include information associated with a service provided from the machine type communication terminal 500.

The transmitter 520 may obtain information associated with an activated/deactivated feature of the machine type communication terminal 500 from subscription information of an HSS entity or a Home Location Register (HLR) entity. For example, the subscription information may include a list of activated or deactivated features of the machine type communication terminal 500, or may include information associated with an activated feature. When a low mobility is activated, and when a list of base stations predicted to be accessed by the machine type communication terminal 500 or 'time controlled' is activated, the subscription information may include information associated with a communicable time zone of the machine type communication terminal 500. In this case, information associated with the activated/deactivated features of the machine type communication terminal 500 obtained from the subscription information may also be included in feature information.

In response to the feature information of the machine type communication terminal 500, the receiver 510 may receive, from the machine type communication server 530, control information that is based on the feature of the machine type communication terminal 500.

For example, the receiver 510 may receive, from the machine type communication server 430 as control information, a deactivation command with respect to at least one function among feature functions of the machine type communication terminal 500. When a data transmission function is suspended with respect to predetermined machine type communication terminals among a plurality of machine type communication terminals controlled by the machine type communication server 530, a number of machine type communication terminals capable of transmitting data to the machine type communication server 530 may decrease. That is, machine type communication terminals capable of transmitting data may have a priority for data transmission and thus, may initially transmit important information.

According to another aspect, control information may correspond to a measurement threshold that is determined to increase a radio channel measurement interval of the machine type communication terminal 500. For example, the machine type communication terminal 500 may compare a radio channel measurement result with the measurement threshold, and may determine a subsequent radio channel measurement interval based on the comparison result. In this case, the radio channel measurement interval may be changed based on the measurement threshold. The machine type communication server 530 may change the radio channel measurement interval of the machine type communication terminal 500 by changing the measurement threshold. When the radio channel measurement interval increases, a battery lifespan of the machine type communication terminal 500 may also be extended.

According to still another aspect, feature information may include information regarding whether data transmitted from the machine type communication terminal 500 to the machine type communication server 530 is tolerant to a time delay. For example, when the machine type communication terminal 500 performs a fire monitoring function, data transmitted from the machine type communication terminal 500 may be considered to be intolerant to the time delay. However, when the machine type communication terminal 500 monitors the safety of a bridge, data transmitted from the machine type communication terminal 500 may be considered to be robust against, that is, tolerant to the time delay.

When the machine type communication server 530 controls a plurality of machine type communication terminals, and a bandwidth is limited due to congestion of data from the plurality of machine type communication terminals, the receiver 510 may receive a server access constraint command as control information with respect to a portion of the machine type communication terminals. In this case, since the machine type communication terminal 500 monitoring the safety of the bridge does not access a server, the machine type communication terminal monitoring the fire may initially transmit data.

According to an aspect, the transmitter 520 may transmit data based on a temporal importance of data transmission or a constraint on a transmission time delay. Data transmitted from the transmitter 520 may be classified into data intolerant to the time delay and data tolerant to the time delay. The transmitter 520 and the machine type communication server 530 may transmit data or set a wireless link parameter based on a delay tolerance with respect to a transmission delay time.

According to an aspect, when data is transmitted using an LTE network, a transmission priority of each machine type communication terminal may be differently set based on a delay tolerance with respect to a transmission delay time. In this case, wireless link parameters may be set based on the delay tolerance and the set wireless link parameters may be transmitted using an access class.

For example, when data transmitted from a machine type communication terminal is tolerant to the transmission delay time, it is possible to decrease an access attempt probability and to set access class (ac)-barring time for the machine type communication terminal by setting an ac-barring factor to a low value, and to increase a network access delay time of delay-tolerant machine type communication terminals.

Conversely, when data transmitted from the machine type communication terminal is intolerant to the transmission delay time, it is possible to set an access class different from the above access class barring radio setting value. As described above, based on the delay tolerance with respect to the transmission delay time, it is possible to set the access class to various values, for example, at least one value.

According to an aspect, it is possible to constrain a right of each machine type communication terminal to access a wireless network or data transmission and reception based on a delay tolerance with respect to a transmission delay time or a time tolerant feature among features of each machine type communication terminal.

For example, when the machine type communication terminal transmits data using a 3GPP network, it is possible to control the machine type communication terminal to not access the wireless network using an RRC message.

For example, it is possible to define, in establishmentcause of RRCConnectionRequest, a new parameter for the machine type communication terminal such as MachineType, TimeTolerent, and the like. When the RRC message including the above parameter is received in the wireless network, the wireless network may transmit an RRCConnectionReject message to the machine type communication terminal.

Also, when the RRC message includes another information indicating that a corresponding terminal is a machine type communication terminal, the wireless network may transmit the RRCConnectionReject message to the machine type communication terminal.

According to an aspect, it is possible to set at least one access class based on a delay tolerance with respect to a transmission delay time of a machine type communication terminal, and to set parameters such as ac-barring factor and ac-barring time for the machine type communication terminal based on the set at least one access class.

Also, a new timer may be set for the above access barring. For example, a newly set timer may be T330. When the machine type communication terminal receives an RRCConnectionReject message as a response to RRCConnectionRequest, T330 timer may be initiated. When the machine type communication terminal is in an RRC_CONNECTED state or successfully performs cell-selection/cell-reselection, T330 timer may be suspended.

When T330 timer is expired, the transmitter 520 may retransmit the RRCConnectionRequest message.

According to another aspect, when the transmitter 520 does not access the wireless network due to an access class, T330 timer may be started. Also, when the transmitter 520 probabilistically does not access the wireless network due to ac-barring factor of the access class, T330 timer may be started.

When the machine type communication terminal in an RRC CONNECTED state is to be disconnected, the receiver 510 may receive an RRCConnectionRelease message from the wireless network. In this case, the receiver 510 may receive the RRCConnectionRelease message including NetworkOverloaded indicating that a connection is to be rejected for a predetermined period of time due to current overload of the wireless network, TimeTolerantblocked commanding suspension of the machine type communication terminal for a predetermined period of time, and the like.

The transmitter 520 may release connection with the wireless network and at the same time, operate T330 timer. While T330 timer is operating, the machine type communication terminal 500 may not attempt to access the wireless network or may perform handover to another cell or perform cell-reselection.

When the machine type communication terminal 500 fails in accessing the wireless network, T330 timer may indicate an amount of time used until the machine type communication terminal 500 attempts the access again. The machine type communication terminal 500 may be set to not attempt re-access for a relatively longer period of time compared to an existing terminal. In this case, T330 timer may be set to be expired when T330 timer has a value greater than a value of a timer for the existing terminal.

In this case, type 1 of a machine type communication terminal may be set so that only communication associated with machine type communication is impossible and data communication using other methods is possible. For example, type 1 of the machine type communication terminal may preset a predetermined data bearer to be used only for the machine type communication, and may determine whether to allow connection for connection of the data bearer using an ID of the data bearer set to be used for the machine type communication. For example, by presetting, for the machine type communication terminal, at least one data bearer ID among 32 data bearer IDs used in a Long Term Evolution (LTE) system, or by dynamically connecting the data bear ID to the machine type communication terminal in connection of the data bearer, it is possible to reject a connection of a time-tolerant data bearer that is to be generated. In addition to the data bearer ID, it is possible to identify data communication of the machine type communication terminal using logicalChannelIdentity, eps-BearerIdentity, and the like.

When a packet is to be transmitted and received only for a predetermined time interval, it is possible to transmit information associated with a time when the packet is to be transmitted and received using system information of the wireless network, an RRC message, Media Access Control (MAC), or physical layer (PHY) information.

According to an aspect, by changing a parameter value of a wireless network, it is possible to constrain data transmission and reception while maintaining an RRC_CONNECTED state of a machine type communication terminal. For example, when data transmission and reception is constrained by setting MAC, it is possible to lower a priority of LogicalChannelConfig by adjusting LogicalChannelConfig that is an RRC message. By lowering prioritisedBitRate, the machine type communication terminal may transmit data at a low bitrate.

According to another aspect, it is possible to control data transmission of a machine type communication terminal by setting a minimum data rate, for example, a minimum bitrate (mBR). This corresponds to a bearer setting method in a wireless link when transmitting packet data in which a packet transmission time delay is allowed. The wireless network may set the minimum data rate with respect to the machine type communication terminal, and guarantee only a minimum data transmission of at least minimum data rate. When resources are sufficient in the wireless network, data may be transmitted at a relatively high bitrate.

However, when resources are insufficient in the wireless network, the wireless network may lower a data rate to be less than the minimum data rate. For example, when the cellular network shares the wireless network with general cellular data and thereby resources become insufficient in the wireless network, the wireless network may transmit data at a minimum bitrate set at the minimum data rate.

According to an aspect, it is possible to determine a transmission rate based on a maximum transmission delay time, for example, a time deadline of data required by a machine type communication service or an application layer. For example, the transmission rate may be determined based on the maximum transmission delay time and a size of a packet desired to be transmitted in the machine type communication service. A minimum data rate may be calculated based on the size of the packet and the maximum transmission delay time.

An information occurrence interval of the machine type communication service or a machine type communication function indicates an interval of transmitting data from the machine type communication service to the wireless network, or receiving data from the wireless network. Data transmission and reception may be periodically or aperiodically performed. Here, aperiodically occurring data transmission and reception may be classified as 'aperiodic' in which the range of change with respect to a time delay is predetermined, and 'sporadic' in which the range of change is not predetermined.

When data transmission is periodically performed, the wireless link may be set based on only a time interval in which the packet transmission and reception is performed. For example, it is possible to control a periodical transmission to be performed by applying a semi-persistent scheduling method and the like in the cellular network.

Since the range of change with respect to the time delay is predetermined in 'aperiodic', the periodical transmission may be performed within a limited time by setting a time interval in which packet data occurs, and the range of change with respect to the time delay.

According to an aspect, communication may need to be set to be available only during a time interval in which an information occurrence pattern of a machine type communication service is determined as one. In this case, a machine type communication terminal may be controlled to not perform communication during a remaining time interval excluding the above time interval.

According to an aspect, the wireless network may bar the machine type communication terminal from accessing the wireless network, or may control the machine type communication to not be connected to the wireless network, or may control the machine type communication terminal to not perform only data transmission and reception.

According to an aspect, the wireless network may transmit, to the machine type communication terminal, control information associated with connection generation with the wireless network. For example, the control information may include congestion of the wireless network, information associated with a traffic situation of the wireless network, barring information, a random access time distributed based on a time base, and information associated with a preamble for random access.

The wireless network may transmit the control information using system information, paging, a broadcasting channel, a multicasting channel, and the like.

When the control information is transmitted using a shared data channel, the machine type communication terminal may receive the control information using an existing ID or a new ID.

For example, when the new ID is introduced to a 3GPP communication network, it is possible to enable a plurality of machine type communication terminals to simultaneously receive the control information associated with the connection generation by assigning a new RNTI to the plurality of machine type communication terminals.

In this case, the wireless network may transmit the control information to the plurality of machine type communication terminals, or may transmit the control information for each service used by each machine type communication terminal, or may transmit the control information based on a session unit or a subscription unit.

According to an aspect, a machine type communication terminal may receive the same setting value as an existing terminal and in this instance, may perform another operation by combining the setting value with another value set for the machine type communication terminal. For example, when receiving a random time delay setting value in a random access system using a 3GPP wireless network, the machine type communication terminal may multiply or add up the other value initially received from the wireless network and the random time delay setting value, or may change the other value using another method and then, use the changed value as the random time delay setting value, thereby operate.

According to an aspect, the machine type communication terminal may be controlled to not be connected to the wireless network using an RRC message. As a method of barring the machine type communication terminal from accessing the wireless network, it is possible to define, in establishmentcause of RRCConnectionRequest, a new parameter such as MachineType, TimeTolerent, and the like. When the wireless network receives an RRC message including the above parameter, the wireless network may transmit an RRCConnectionReject message to the machine type communication terminal.

T331 timer may be defined for the aforementioned access barring. When the machine type communication terminal receives an RRCConnectionReject message as a response to RRCConnectionRequest, T331 may be started. When the machine type communication terminal is in an RRC_CONNECTED state or successfully performs cell-selection/cell-reselection, T331 timer may be suspended. When T331 timer is expired, the machine type communication terminal may retransmit the RRCConnectionRequest message. Here, T331 timer corresponds to an amount of time used until the wireless network allows the communication again.

When the machine type communication terminal being in the RRC_CONNECTED state needs to release connection with the wireless network since a predetermined amount of time is elapsed, the wireless network may transmit, to the machine type communication terminal, an RRCConnectionRelease message that is an RRC message. In this instance, it is possible to add, to Releasecause, predefinedtimeover indicating that a predetermined time is over, TimeControlledblocked indication suspension of a machine type communication terminal operating only for the predetermined period time, and the like. By operating T331 at the same time when the connection state is terminated using RRCConnectionRelease, the machine type communication terminal may be barred from connection to the wireless network by a predetermined time, and may attempt handover to another cell or attempt cell-reselection.

According to an aspect, even an existing terminal as well as the machine type communication terminal 500 may perform random access with respect to the wireless network. In this case, to identify the machine type communication terminal 500 from the existing terminal, a separate ID, for example, RNTI for random access may be assigned.

In this case, the wireless network may assign a first ID to the machine type communication terminal 500 and may assign a second ID to the existing terminal. Control information received by the machine type communication terminal 500 may include the first ID that is separate from the second ID and is assigned to the machine type communication terminal 500.

The wireless network may set different random delay values to the machine type communication terminal 500 and a second terminal. Hereinafter, a random delay value set to the machine type communication terminal 500 is referred to as a first random delay value, and a random delay value set to the second terminal is referred to as a second random delay value. The wireless network may transmit the first ID and the first random value to the machine type communication terminal 500, and may transmit the second ID and the second random delay value to the second terminal.

When the receiver 510 receives the first random delay value transmitted together with the first ID, the transmitter 520 may perform a random access procedure with respect to the wireless network using the first random delay value.

According to another aspect, the machine type communication terminal 500 may perform random access with respect to the wireless network using an added control parameter.

For example, the wireless network may transmit, to the machine type communication terminal 500 and the second terminal, a random delay value that is commonly set with respect thereto.

The second terminal may perform random access with respect to the wireless network using a received random delay value. However, in this case, the receiver 510 may further receive an additional control message from the wireless network.

The transmitter 520 may generate a second random delay value based on the random delay value and the additional control message. For example, the transmitter 520 may generate the second random delay value by adding up or multiplying the random delay value and the additional control message. In this case, the second random delay value may be greater than the random delay value. The transmitter 520 may perform a random access procedure with respect to the wireless network using the second random delay value.

According to another aspect, the wireless network may assign different random access preambles to the machine type communication terminal 500 and the second terminal. In this case, the wireless network may generate a first random access preamble group including first random access preambles available by the machine type communication terminal 500, and a second random access preamble group including second random access preambles available by the second terminal.

The machine type communication terminal 500 may receive, from the wireless network, information associated with the first random access preambles. In this case, the transmitter 520 may perform random access with respect to the wireless network using the first random access preamble. The second terminal may perform random access with respect to the wireless network using the second random access preamble.

The machine type communication terminal 500 may receive information associated with a time when the machine type communication terminal 500 performs random access with respect to the wireless network, and the transmitter 520 may perform the random access at the time when the machine type communication terminal 500 performs the random access. The machine type communication terminal 500 and the second terminal may perform the random access in different time zones.

Information associated with the first random access preamble may be transmitted using at least one of an RRC message, system information of the wireless network, and a paging message.

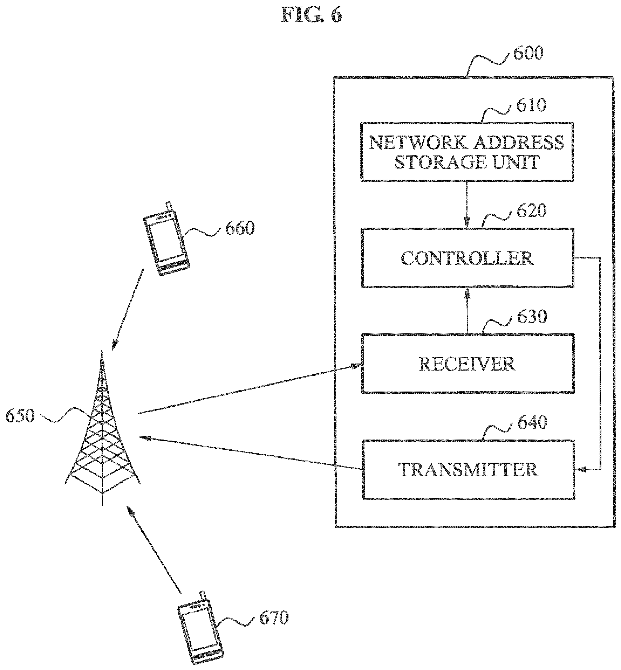

FIG. 6 is a block diagram illustrating a configuration of a machine type communication terminal 600 according to another embodiment of the present invention. The machine type communication terminal 600 may include a network address storage unit 610, a controller 620, a receiver 630, and a transmitter 640.

The network address storage unit 610 may store a network address assigned to the machine type communication terminal 600. The machine type communication terminal 600 and second machine type communication terminals 660 and 670 may be assigned with the same network address.

The receiver 630 may receive, from a machine type communication server 650, a communication request including the network address. The communication request may correspond to a data transmission request with respect to the machine type communications 650, 660, and 670 assigned with the network address included in the communication request.

The controller 620 may compare the network address included in the communication request with the network address of the machine type communication terminal 600 stored in the network address storage unit 610. When the network address included in the communication request is the same as the network address of the machine type communication terminal 600 stored in the network address storage unit 610, the communication request may be a data transmission request with respect to the machine type communication terminal 600.

In this case, the transmitter 640 may transmit data to the machine type communication server 650. When the second machine type communication terminals 660 and 670, instead of the machine type communication terminal 600, transmit second data to the machine type communication server 650, the transmitter 640 may not transmit data.

According to another aspect, each of the first machine type communication terminal 600 and the second machine type communication terminals 660 and 670 may have a unique ID or a unique network address. In this case, the machine type communication server may broadcast or multicast a data request to a plurality of machine type communication terminals, for example, the first machine type communication terminal 600 and the second machine type communication terminals 660 and 670. In this case, only a single machine type communication terminal among the plurality of machine type communication terminals may transmit data in response to the data request. The above scheme may be a multiple device push scheme.

A separate ID, for example, RNTI may be used to identify each machine type communication terminal.

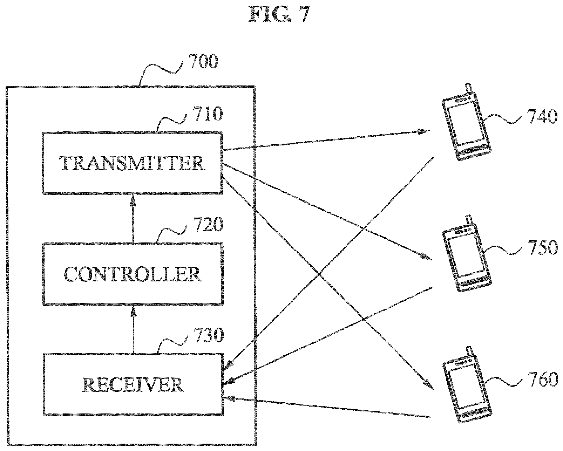

FIG 7 is a block diagram illustrating a configuration of a machine type communication server 700 according to an embodiment of the present invention. The machine type communication server 700 may include a transmitter 710, a controller 720, and a receiver 730.

The transmitter 710 may transmit a communication request to a plurality of machine type communication terminals 740, 750, and 760 having the same network address. The communication request may include a network address. The communication request may be a data transmission request with respect to machine type communication terminals assigned with the network address included in the communication request.

When the network address of the machine type communication terminals 740, 750, and 760 receiving the communication request is the same as the network address included in the communication request, the receiver 730 may receive, in response to the communication request, data from at least one of the machine type communication terminals 740, 750, and 760.

The receiver 730 may receive data from at least one machine type communication terminal. In this case, even though the receiver 730 does not receive data from all of the machine type communication terminals 740, 750, and 760, a communication procedure may be terminated.

The receiver 730 may receive feature information of a corresponding machine type communication terminal from the machine type communication terminals 740, 750, and 760. The feature information may include information associated with a type of the corresponding machine type communication terminal and a function thereof.

The transmitter 710 may transmit, to the machine type communication terminals 740, 750, and 760, control information that is generated based on the feature information.

According to an aspect, control information may correspond to a deactivation command with respect to at least one function among functions of the machine type communication terminals 740, 750, and 760. A machine type communication terminal having not received the deactivation command may still maintain the function and thus, may initially operate over a machine type communication terminal having received the deactivation command.

According to another aspect, control information may correspond to a measurement threshold that is determined to increase a radio channel measurement interval of the machine type communication terminals 740, 750, and 760. For example, each of the machine type communication terminals 740, 750, and 760 may compare a radio channel measurement result with the measurement threshold and determine a subsequent radio channel measurement interval based on the comparison result. In this case, the radio channel measurement interval may be changed based on the measurement threshold. The controller 720 may change the radio channel measurement interval of the machine type communication terminals 740, 750, and 760 by changing the measurement threshold. When the radio channel measurement interval increases, a battery lifespan of the machine type communication terminals 740, 750, and 760 may also be extended.

According to still another aspect, feature information may include information regarding whether data transmitted from the machine type communication terminals 740, 750, and 760 to the machine type communication server 730 is intolerant to a time delay. For example, when the machine type communication server 700 controls the plurality of machine type communication terminals 740, 750, and 760, and a bandwidth is limited due to congestion of data from the plurality of machine type communication terminals 740, 750, and 760, the receiver 730 may receive a server access constraint command as control information with respect to a portion of machine type communication terminals. In this case, since the machine type communication terminals 740 and 750 do not access the machine type communication server 700, the machine type communication terminal 760 may initially transmit data.

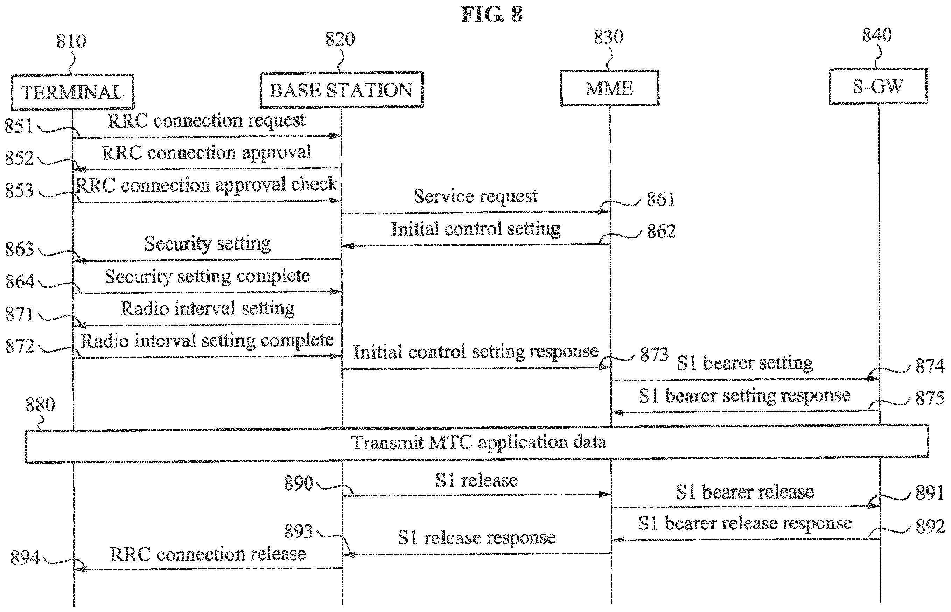

FIG 8 is a diagram illustrating a procedure for exchanging control information for a wireless network access of a machine type communication terminal 810 according to an embodiment of the present invention.

The machine type communication terminal 810 may access a wireless network after exchanging predetermined control information with the wireless network, and may perform data transmission after accessing the wireless network.

In operations 851 and 852, the machine type communication terminal 810 may be connected to a base station 820. In operation 861, the base station 820 may request an MME 830 for a service to be provided to the machine type communication terminal 810. In operation 862, the MME 830 may set an initial control for providing the service.

When setting of control information required for integrity or ciphering is completed, the machine type communication terminal 810 may transmit and receive control information and data information using predetermined security setting without additional operations 863 and 864 for security setting after performing an RRC access procedure through operations 851 through 853. For example, the control information required for integrity or ciphering may be inserted during a manufacturing process of the machine type communication terminal 810, or may be set in an initial access to the base station 820, or may be transmitted using downlink control information such as paging, system information, and the like. In this case, a security level of the machine type communication terminal 810 may be determined as a basic value. A function of integrity or ciphering may be constrained. In operations 863 and 864, the machine type communication terminal 810 may receive an additional parameter for setting of a higher security level. In this case, the function of integrity or ciphering may not be constrained. Since a basic parameter is received in operations 851 through 853, operations 863 and 864 may be readily performed.

According to an aspect, the security level of the machine type communication terminal 810 may be classified as three types based on a required security level of data desired to be transmitted. The security level of the machine type communication terminal 810 may be classified as 1) a security level in which a thorough security is required, 2) a security level in which security is required, however, a serious error does not occur in a system even though a security issue occurs, and 3) a security level in which security is not required at all. Based on the security level, the machine type communication terminal 810 may perform a different procedure with respect to setting of a wireless section, assignment of a wireless resource, and the like.

After operations 863 and 864, the machine type communication terminal 810 may perform operations 871 and 872 of setting the wireless section. In an operation of resetting an RRC connection, the machine type communication terminal 810 may receive the control information by including the control information in a wireless section setting message or an RRC connection resetting message.

According to another aspect, the machine type communication terminal 810 may receive integrity related information in operations 851 through 853 for the RRC connection, and may receive ciphering related information in operations 871 and 872 for setting the wireless section, or vice versa.

According to still another aspect, the machine type communication terminal 810 may not perform any security setting. For example, while performing a random access procedure in operations 851 through 853, when the base station 820 or the MME 830 verifies a corresponding terminal as a machine type communication terminal, the base station 820 or the MME 830 may determine that the security setting is not required. In this case, the machine type communication terminal 810 may transmit and receive data without setting integrity or ciphering.

The machine type communication terminal 810 may periodically transmit data. In this case, the machine type communication terminal 810 may need to repeat connection and release with respect to the base station 820 or the wireless network for each data transmission.

In an initial access of the machine type communication terminal 810, the machine type communication terminal 810 may access the base station 820 or the wireless network in operations 851 and 852.

When a position of the machine type communication terminal 810 is fixed, it is highly probable that the base station 820 to be accessed after the initial access does not change. In this case, the machine type communication terminal 810 may not attempt access using an RRCConnectionRequest message after the initial access, and may attempt the access using an RRCConnectionReestablishment procedure. That is, the machine type communication terminal 810 may insert, into a message, a parameter indicating an access by the machine type communication terminal 810 or a message indicating an access by the previously accessed machine type communication terminal 810, and may use the RRCConnectionReestablishment procedure as a procedure for a network access.

In this case, the machine type communication terminal 810 and the base station 820 may store settings used for the previous access and may simply perform the access using the stored settings.

When resetting of the machine type communication terminal 810 is required due to a change of a code algorithm and the like, the machine type communication terminal 810 may perform again the access procedure followed by the securing setting procedure operations 871 and 872. In this case, the base station 820 may reject the access attempt of the machine type communication terminal 810.

The base station 820 may inform the machine type communication terminal 810 of a rejection cause. The rejected machine type communication terminal 810 may reattempt the access after a predetermined period of time is elapsed. In the case of RRCConnectionRelease, each of the machine type communication terminal 810 and the base station 820 may store setting information using a predetermined release cause.

According to an aspect, based on a feature of a wireless network used by a machine type communication terminal, a procedure of obtaining a reception synchronization or a transmission synchronization may be required prior to transmitting data. When the synchronization obtainment procedure is required, the machine type communication terminal may transmit data after obtaining the synchronization.

A radio resource used when the machine type communication terminal transmits data may be assigned based on a contention or a non-contention. In the case of a contention-free based radio resource, the machine type communication terminal may exclusively occupy the radio resource and thereby transmit data. In the case of a contention based radio resource, the machine type communication terminal may share data with another machine type communication terminal or a terminal and thereby transmit data. The contention based radio resource may have a probability of collision and contention.

According to an aspect, a contention based radio resource assignment scheme may be similar to a radio resource assignment scheme for a random access procedure in a cellular system. Accordingly, when assigning the contention based radio resource, the wireless network may transmit information associated with a radio resource available based on the contention using system information and the like, so that machine type communication terminals may recognize the information prior to transmitting data.

In the case of the wireless network where a contention based uplink transmission is available, the wireless network may transmit, to the machine type communication terminal, information regarding whether the contention based uplink transmission is available in a predetermined subframe, or information associated with a subframe in which data transmission using the contention based uplink transmission is available. In a corresponding subframe, the machine type communication terminal may transmit data to the wireless network using the contention based uplink transmission scheme.

For example, a 3GPP wireless network may assign a separate radio resource to transmit packet information to an uplink using a contention scheme. The machine type communication terminal may transmit a contention-based packet to the 3GPP wireless network using the assigned radio resource.

According to an aspect, the wireless network may limit only a machine type communication terminal maintaining or having obtained an uplink physical layer transmission synchronization to employ the contention based uplink transmission scheme. However, if a system allows, the wireless network enables even a machine type communication terminal not maintaining or having not obtained the uplink physical layer transmission synchronization to employ the contention based uplink transmission scheme.

A radio resource assignment of a machine type communication terminal using a Random Access Channel (RACH) procedure may be limited to not affect an RACH procedure of an existing terminal.

According to an aspect, a wireless network may designate a group of preambles that may be used by a machine type communication terminal among RACH preambles. The group of preambles may be changed. The wireless network may use system information, an RRC message, MAC information, and the like to transmit information associated with the group of preambles to the machine type communication terminal.

According to another aspect, when the machine type communication terminal transmits a RACH preamble, the machine type communication terminal may also transmit information indicating that the RACH preamble is transmitted from the machine type communication terminal. The wireless network may identify the RACH preamble transmitted from the machine type communication terminal from an RACH preamble transmitted from an existing terminal. Accordingly, the RACH procedure of the existing terminal may not be affected.

According to still another aspect, the wireless network may limit a connection success rate of the machine type communication terminal in eNB during the RACH procedure so that RACH procedure of the existing terminal may not be affected. For example, when a contention resolution procedure is performed, the wireless network may set a connection establishment of the existing terminal to have a priority over a connection establishment of the machine type communication terminal, so that the existing terminal may not be affected.

According to an aspect, the wireless network may effectively distribute radio resources so that both the machine type communication terminal and the existing terminal may smoothly perform random access. For example, the wireless network may classify a radio resource used for the machine type communication terminal to perform random access, and a radio resource used for the existing terminal to perform a random access.

According to another aspect, the wireless network may assign the same radio resource to the machine type communication terminal and the existing terminal. The machine type communication terminal and the existing terminal may change a setting value and the like and thereby perform random access. For example, the wireless network may define new RNTI for the machine type communication terminal. In this case, the machine type communication terminal and the existing terminal use the same radio resource, however, use different RNTI values and thus, may separately perform random access.

According to an aspect, prior to performing random access, the machine type communication terminal may verify RNTI for performing random access. According to another aspect, the wireless network may assign a predetermined time interval to the machine type communication terminal. When the radio resource for the random access is assigned, the machine type communication terminal may perform random access after a predetermined amount of time within the time interval is elapsed based on the assigned time interval, instead of immediately performing the random access. In this case, the wireless network may transmit information associated with the assigned time interval using an RRC message, system information, and the like. According to still another aspect, the machine type communication terminal may calculate information associated with the assigned time interval using another value received from the wireless network. Also, the machine type communication terminal may selectively receive predetermined RNTI among RNTIs for the random access, and may determine a random delay time based on the received RNTI.

According to an aspect, the machine type communication terminal may communicate with the wireless network using a physical layer having a unique feature. For example, in a cellular network, the machine type communication terminal may communicate with the wireless network using a unicast subframe like the existing terminal. In this case, the machine type communication terminal and the existing terminal may share the same radio resource.

According to another aspect, the machine type communication terminal may communicate with the wireless network using a Multicast-Broadcast Single Frequency Network (MBSFN) subframe or a subframe set for the machine type communication terminal. The machine type communication terminal may communicate with the wireless network by combining different subframes based on a feature of data to be transmitted.

Data transmission or control signal transmission of the machine type communication terminal may be performed by combining at least one of unicast, multicast, and broadcast schemes. When performing transmission using the multicast scheme or the broadcast scheme, an existing channel may be employed, or a new channel may be configured. The existing channel may include a logic channel, for example, an MCCH and an MTCH, a transmission channel, for example, an MCH, and a physical channel, for example, a physical multicast channel (PMCH) .

To transfer a control message to machine type communication terminals belonging to a predetermined region, the multicast scheme or a paging message may be used. As an example of transferring control information in an LTE network using the broadcast scheme, a method similar to a CBS service used in a Universal Mobile Telecommunications System (UMTS) may be employed. Also, control information associated with the machine type communication terminal may be transmitted using system information or broadcast control information.

According to an aspect, the machine type communication terminal may be in a state capable of receiving only control information transmitted using broadcast control information, system information, a physical broadcast channel (PBCH), or a PMCH. When the above message is received, at least one machine type communication terminal may be connected to a communication network, or may be controlled to transmit data.

When using a multicast channel, the wireless network may classify the machine type communication terminal into at least one multicast channel group based on position information of the machine type communication terminal. In this case, the wireless network may multicast control information to machine type communication terminals included in a predetermined multicast channel group.

According to an aspect, control information may be transmitted without any constraints, and may also be repeatedly transmitted during a predetermined time interval, thereby enhancing the reception stability.

According to an aspect, even though control information is transmitted to all the machine type communication terminals, only a portion of the machine type communication terminals may process the control information and perform a designated operation. For example, to identify a receiver of control information and data, a terminal to process control information or data may be designed using an ID of a machine type communication group, an ID of the machine type communication terminal, and the like.

According to an aspect, the wireless network may transmit, to a predetermined machine type communication terminal using a control message, information associated with an index of a subframe accessible by the predetermined machine type communication terminal. In this case, the control message may be system information of a base station, a broadcast message for machine type communication terminals, or a dedicated control message for the predetermined machine type communication terminal.

To secure the reliability of data transmission among the machine type communication terminal, a machine type communication server, and the wireless network, retransmission in a physical layer using a Hybrid Automatic Repeat Request (HARQ) and the like may be applied. An enhanced encoding scheme may be applied to repeatedly transmit control information of the same description using a continuously or repeatedly assigned radio resource, or to obtain an encoding gain.

The communication of the machine type communication terminal may be deactivated for a most period of time. Even though the communication is activated, the machine type communication terminal may need to transmit only a small amount of data. An amount of data to be transmitted may be significantly greater than an amount of control information and thus, the machine type communication terminal may transmit the control information and the data in a piggybacked form. When acknowledgement/non-acknowledgement (ACK/NACK) with respect to the transmitted data is received, or when retransmission of the transmitted data is required, the wireless network may effectively set the wireless resource.

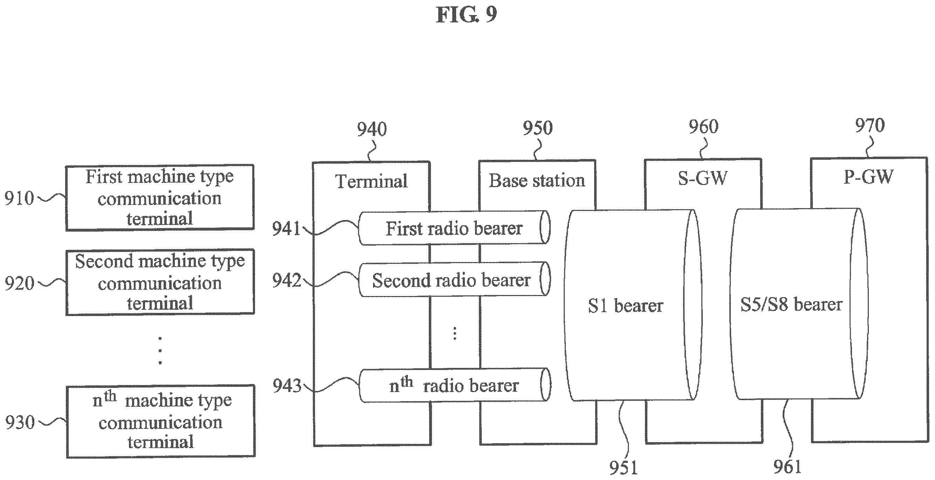

FIG. 9 is a diagram illustrating a communication scheme enabling each of a plurality of machine type communication terminals within the same group to include a radio bearer in a radio access interval and enabling the plurality of machine type communication terminals to share a single radio bearer after a base station according to an embodiment of the present invention.

When a wireless network classifies the plurality of machine type communication terminals into a group and thereby manages, the wireless network may define an ID for managing the group. The wireless network may classify the machine type communication terminals based on various features of the machine type communication terminals. For example, the wireless network may classify a corresponding machine type communication terminal based on a type thereof, a user thereof, a feature of data to be transmitted and received thereby, a quality of service used thereby, and the like.

According to an aspect, machine type communication terminals included in the same group may have respective corresponding radio bearers and may share a single radio bearer after a base station.

Referring to FIG 9, machine type communication terminals including a first machine type communication terminal 910, a second machine type communication terminal 920, and an n^{th} machine type communication terminal 930, belonging to the same machine type communication group, may transmit data to a base station 950 using corresponding assigned radio bearers, for example, a first radio bearer 941, a second radio bearer 942, and an n^{th} radio bearer 943.

The base station 950 may maintain a list of machine type communication terminals included in a predetermined machine type communication terminal group. The base station 950 may receive information associated with the machine type communication terminals from an upper network entity, for example, MME, HSS, and the like, based on subscription information and may store the received information.

When machine type communication terminals included in the same group perform uplink transmission using corresponding radio bearers, the base station 950 may map the radio bearers to at least S1 bearer, for example, S1 bearer 951 and S5/S8 bearer 961.

When the machine type communication terminal group receives downlink data using the bearers 951 and 961, the base station 950 may retrieve a suitable terminal from machine type communication terminals included in a corresponding group and transmit data or paging using a corresponding radio bearer.

According to an aspect, when a machine type communication terminal belonging to a predetermined group establishes at least S1 bearer using a network access procedure, the base station 950 may establish the at least S1 bearer as a bearer with respect to the group. That is, the at least S1 bearer established by a machine type communication terminal most initially performing a network access in the group may be established as at least S1 bearer with respect to the group.

When data transmission of the machine type communication terminal initially performing the network access is terminated, the base station 950 may release only a bearer of a radio access portion without releasing the at least S1 bearer. Machine type communication terminals subsequently accessing a network may simply access the network by establishing only the bearer of the wireless access portion.

When at least S1 bearer is not used for at least a predetermined period of time, the base station 950 may delete the at least S1 bearer.

Although a few embodiments of the present invention have been shown and described, the present invention is not limited to the described embodiments. Instead, it would be appreciated by those skilled in the art that changes may be made to these embodiments without departing from the principles and spirit of the invention, the scope of which is defined by the claims and their equivalents.

Moreover, the present invention is disclosed in the following examples:
1. A machine type communication terminal, comprising:
   a transmitter to transmit feature information associated with the machine type communication terminal to a machine type communication server; and
   a receiver to receive, from the machine type communication server in response to the feature information, control information that is based on a feature of the machine type communication terminal.
2. The machine type communication terminal of example 1, wherein the transmitter comprises the feature information in a Radio Resource Control (RRC) message to thereby transmit the RRC message.
3. The machine type communication terminal of example 1, wherein the feature information comprises information associated with a type of the machine type communication terminal and a function of the machine type communication terminal.
4. The machine type communication terminal of example 1, wherein the control information corresponds to a measurement threshold that is determined to increase a radio channel measurement interval of the machine type communication terminal.
5. The machine type communication terminal of example 1, wherein:
   the feature information comprises information about whether data is tolerant to a time delay, and
   the control information corresponds to an access constraint command with respect to the machine type communication server that is determined based on the feature information.
6. The machine type communication terminal of example 1, wherein the control information corresponds to a deactivation command with respect to at least one function among functions of the machine type communication terminal.
7. The machine type communication terminal of example 1, wherein the feature information comprises information associated with a tolerance of data transmitted from the machine type communication terminal to the machine type communication server, with respect to a transmission time delay.
8. The machine type communication terminal of example 7, wherein when an RRC connection reject message is received in response to an RRC connection request, the transmitter retransmits the RRC connection request after a predetermined time interval.
9. The machine type communication terminal of example 1, wherein:
   the control information comprises information associated with first random access preambles that are separate from second random access preambles assigned to a second terminal performing random access with respect to a base station, and that are assigned to the machine type communication terminal, and
   the transmitter performs a random access procedure with respect to the base station using the first random access preamble.
10. The machine type communication terminal of example 9, wherein the control information is transmitted using at least one of an RRC message, system information of the base station, and a paging message.
11. The machine type communication terminal of example 9, wherein the control information comprises information associated with a time to perform the random access procedure.
12. The machine type communication terminal of example 1, wherein:
   the control information comprises a first identifier that is separate from a second identifier assigned to a second terminal performing random access with respect to a base station, and is assigned to the machine type communication terminal, and
   when the receiver receives, from the base station, a random delay value transmitted together with the first identifier, the transmitter performs a random access procedure with respect to the base station using the random delay value transmitted together with the first identifier.
13. The machine type communication terminal of example 1, wherein:
   the control information comprises a random delay value that is set with respect to a second terminal performing random access with respect to a base station,
   the receiver receives an additional control message from a base station, and
   the transmitter performs a random access procedure with respect to the base station using a second random delay value that is generated based on the random delay value and the additional control message.
14. A machine type communication terminal, comprising:
   a network address storage unit to store the same network address of the machine type communication terminal as a network address of a second machine type communication terminal.
15. The machine type communication terminal of example 14, further comprising:
   a receiver to receive, from a machine type communication server, a communication request comprising a network address;
   a controller to compare the network address included in the communication request with the network address of the machine type communication terminal; and
   a transmitter to transmit data to the machine type communication server when the network address included in the communication request is identical to the network address of the machine type communication terminal.
16. The machine type communication terminal of example 15, wherein when the second machine type communication terminal transmits second data to the machine type communication server in response to the communication request, the transmitter does not transmit the data.
17. A machine type communication server, comprising:
   a transmitter to transmit a communication request to a plurality of machine type communication terminals having the same network address; and
   a receiver to receive data from at least one communication terminal among the plurality of machine type communication terminals in response to the communication request, and to terminate a communication procedure according to reception of the data.
18. The machine type communication server of example 17, wherein:
   the receiver receives feature information associated with the machine type communication terminals from the machine type communication terminals, and
   the transmitter transmits, to the machine type communication terminals, control information that is generated based on the feature information.
19. The machine type communication server of example 18, wherein the control information comprises information associated with types of the machine type communication terminals and functions of the machine type communication terminals.
20. The machine type communication server of example 19, wherein the control information corresponds to a deactivation command with respect to at least one function among the functions of the machine type communication terminals.
21. The machine type communication server of example 17, further comprising:
   a controller to determine a measurement threshold to increase a radio channel measurement interval of a predetermined machine type communication terminals,
   wherein the transmitter transmits the measurement threshold to the machine type communication terminal.
22. The machine type communication server of example 18, wherein:
   the feature information comprise whether the data is tolerant to a time delay, and
   the machine type communication server further comprises:
      a controller to generate, as the control information, an access constraint command with respect to at least one machine type communication terminal among the plurality of machine type communication terminals based on the feature information.

## Claims

1. A method of wireless communications performed by a terminal, the method comprising:
generating data;
transmitting an RRC (Radio Resource Control) message to a base station, wherein the RRC message is a request to establish a wireless connection and the RRC message includes first information indicating that the terminal is delay tolerant; and
transmitting the data to the base station.

2. The method of claim 1, further comprising:
receiving a response from the base station, the response indicating that the request has been rejected;
waiting for a predetermined period of time after receiving the response from the base station; and
transmitting another request requesting the base station to establish a wireless connection to the terminal,
wherein the response comprises a first field indicating a first waiting time and a second field indicating second waiting time, and the second waiting time is longer than the first waiting time.

3. The method of claim 2, wherein the response comprises second information to be used to adjust priority of certain radio resources for the terminal.

4. The method of claim 1, wherein the RRC message is an RRCConnectionRequest message, and the first information comprises an EstablishmentCause.

5. A communication apparatus, comprising:
a memory: and
a processor operably coupled to the memory,
wherein the processor, when executing program instructions stored in the memory, is configured to:
cause the apparatus to generate data;
cause the apparatus to transmit an RRC (Radio Resource Control) message to a base station, wherein the RRC message is a request to establish a wireless connection and the RRC message includes first information indicating that the apparatus is delay tolerant; and,
cause the apparatus to transmit the data to the base station.

6. The apparatus of claim 5, wherein the processor is further configured to:
cause the apparatus to receive a response from the base station, the response indicating that the first request has been rejected;
cause the apparatus to wait for a predetermined period of time after receiving the response from the base station; and
cause the apparatus to transmit another request requesting the base station to establish a wireless connection to the apparatus, and
wherein the response comprises first field indicating a first waiting time and a second field indicating a second waiting time, and the second waiting time is longer than the first waiting time, wherein the response preferably comprises second information to be used to adjust priority of certain radio resources for the apparatus.

7. The apparatus of claim 5, wherein the RRC message is an RRCConnectionRequest message, and the first information comprises an EstablishmentCause.

8. A communication apparatus comprising:
a memory; and
a processor operably coupled to the memory,
wherein the processor, when executing program instructions stored in the memory, is configured to:
cause the apparatus to receive an RRC (Radio Resource Control) message from a terminal, wherein the RRC message is a request to establish a wireless connection and the RRC message includes first information indicating that the terminal is delay tolerant;
cause the apparatus to determine whether to establish the wireless connection based on the first information; and
cause the apparatus to receive data from the terminal if the apparatus determines to establish the wireless connection.

9. The apparatus of claim 8, wherein the processor is further configured to:
cause the apparatus to transmit a response to the terminal, the response indicating that the request has been rejected; and
cause the apparatus to receive another request from the terminal requesting the apparatus to establish a wireless connection to the terminal,
wherein the response comprises a first field indicating a first wait time and a second field indicating a second waiting time, and the second waiting time is longer than the first waiting time.

10. The apparatus of claim 9, wherein the response comprises second information to be used to adjust priority of certain radio resources for the terminal.

11. The apparatus of claim 8, wherein the RRC message is an RRCConnectionRequest message, and the first information comprises an EstablishmentCause.

12. A communication method comprising:
receiving, at a base station, an RRC (Radio Resource Control) message from a terminal, wherein the RRC message is a request to establish a wireless connection and the RRC message includes first information indicating that the terminal is delay tolerant; and
determining, at the base station, whether to establish the wireless connection based on the first information; and
receiving data from the terminal if the base station determines to establish the wireless connection.

13. The method of claim 12, further comprising:
transmitting a response to the terminal, the response indicating that the request has been rejected; and
receiving another request from the terminal requesting the base station to establish a wireless connection to the terminal,
wherein the response comprises a first field indicating a first wait time and a second field indicating a second waiting time, and the second waiting time is longer than the first waiting time.

14. The method of claim 13, wherein the response comprises second information to be used to adjust priority of certain radio resources for the terminal.

15. The communication method of claim 12, wherein the RRC message is an RRCConnectionRequest message, and the first information comprises an EstablishmentCause.
